# EUROPÄISCHE PATENTSCHRIFT

(11) **EP 1 995 085 B1**
(45) Veröffentlichungstag und Bekanntmachung des Hinweises auf die Patenterteilung: **18.08.2010**
(21) Anmeldenummer: 08450050.3
(22) Anmeldetag: 01.04.2008
(51) Int. Cl.: B60D 1/06, B60D 1/28, B60D 1/30

(54) **Niederhaltervorrichtung**
Binder device
Dispositif d'assujettissement

(30) Priorität: 22.05.2007 AT 7982007
(43) Veröffentlichungstag der Anmeldung: 26.11.2008
(73) Patentinhaber: Scharmüller, Christine, 4892 Fornach (AT)
(72) Erfinder: Scharmüller, Christine, 4892 Fornach (AT)
(74) Vertreter: Gibler & Poth Patentanwälte OEG

(56) Entgegenhaltungen:
- EP-A- 1 559 592
- FR-A- 2 446 733
- GB-A- 945 345
- US-A- 3 635 496
- US-A1- 2002 140 205
- US-A1- 2004 155 430

## Beschreibung

Die Erfindung betrifft eine Niederhaltervorrichtung gemäß dem Oberbegriff des Anspruches 1.

Bei Kupplungen mit einer Kupplungskugel kann eine Zugöse auf die Kupplungskugel aufgesetzt werden. Um die Zugöse im Betrieb auf der Kupplungskugel zu halten, ist eine Niederhaltervorrichtung vorgesehen. Die Niederhaltervorrichtung kann auf der Kupplung gemeinsam mit der Kupplungskugel bereitgestellt werden, wobei die Kupplungskugel und die Niederhaltervorrichtung auf einer gemeinsamen Grundplatte und/oder in einem gemeinsamen Grundrahmen befestigt sind.

Die EP 1 559 592 A zeigt ein Anhänger-Zwangslenkungsmodul mit einer gattungsgemäßen Niederhaltervorrichtung zum Halten einer auf einer Kupplungskugel angeordneten Zugöse. Aufgabe der Erfindung ist es, eine Niederhaltervorrichtung anzugeben, die einfach und robust aufgebaut ist, eine hohe Funktionssicherheit aufweist, mit der eine hohe Funktionalität der Kupplung bereitgestellt werden kann, die schnell gewechselt werden kann und die einfach und kostengünstig hergestellt werden kann.

Erfindungsgemäß wird dies durch die Merkmale des Anspruches 1 erreicht.

Dadurch kann durch die Niederhaltervorrichtung neben der Sicherstellung des Festhaltens der Zugöse bzw. dem Zugzapfen auf der Kupplungskugel weiters eine Zwangslenkung bereitgestellt werden. Dadurch können die Niederhaltervorrichtung und die Zwangslenkung als Modul auf der Grundplatte und/oder dem Grundrahmen befestigt werden und bei Bedarf einfach und schnell ausgetauscht werden. Das Befestigungselement kann zum Zusammenwirken mit einem Zwangslenkungsmodul ausgebildet sein, wobei das Zwangslenkungsmodul lösbar mit der Niederhaltervomchtung befestigt ist. Dadurch kann die Niederhaltervorrichtung auch ohne Zwangslenkungsmodul verwendet werden, wobei die Bewegung der Zugöse durch die Haltevorrichtung für die Zwangslenkung nur unwesentlich eingeschränkt wird. Gegebenenfalls kann auch vorgesehen sein, dass das Zwangslenkungsmodul in eine neutrale Stellung gebracht werden kann, wenn es für einen Anhänger nicht benötigt wird.

Weiters kann die Niederhaltervorrichtung auch einfach bei einem Zugzapfen unter Ausbildung einer sogenannten Piton-Fix Kupplung eingesetzt werden, wobei auch hier eine Zwangslenkung bereitgestellt werden kann.

Die Unteransprüche, welche ebenso wie der Anspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste Ausführungsform einer erfindungsgemäßen Niederhaltervorrichtung auf einer Grundplatte;
Fig. 2 bis 7 verschiedene Ausführungsformen eines Zwangslenkungsmoduls für eine Niederhaltervorrichtung gemäß Fig. 1;
Fig. 8 eine andere Ausführungsform einer erfindungsgemäßen Niederhaltervorrichtung; und
Fig. 9 bis 12 eine weitere Ausführungsform einer erfindungsgemäßen Niederhaltervorrichtung.

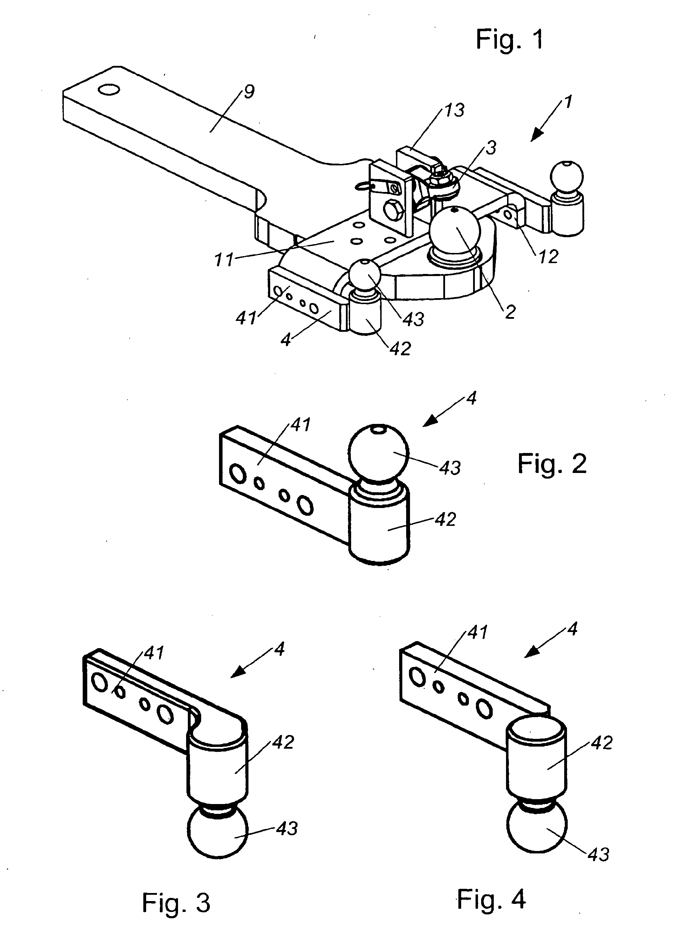

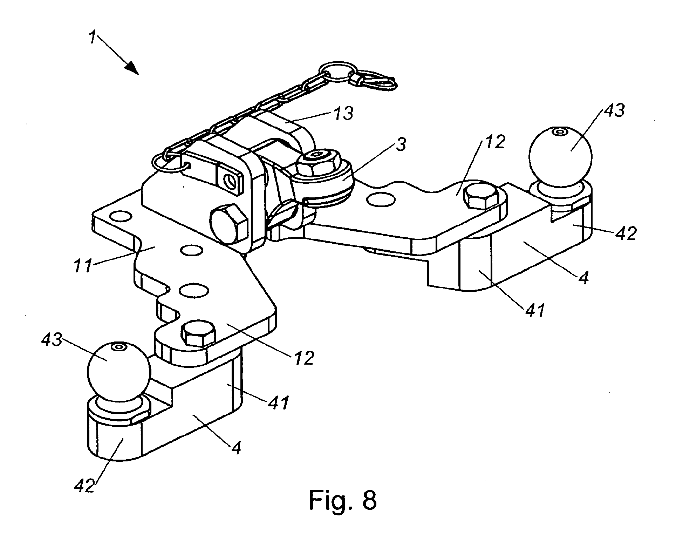

Die Fig. 1 und 8 zeigen Ausführungsformen einer erfindungsgemäßen Niederhaltervorrichtung 1 zum Halten einer auf einer Kupplungskugel 2 angeordneten Zugöse, mit einem Befestigungselement 11 zum Befestigen auf einer Grundplatte 9, wobei an dem Befestigungselement 11 wenigstens eine Haltevorrichtung 12 für eine Zwangslenkung angeordnet ist.

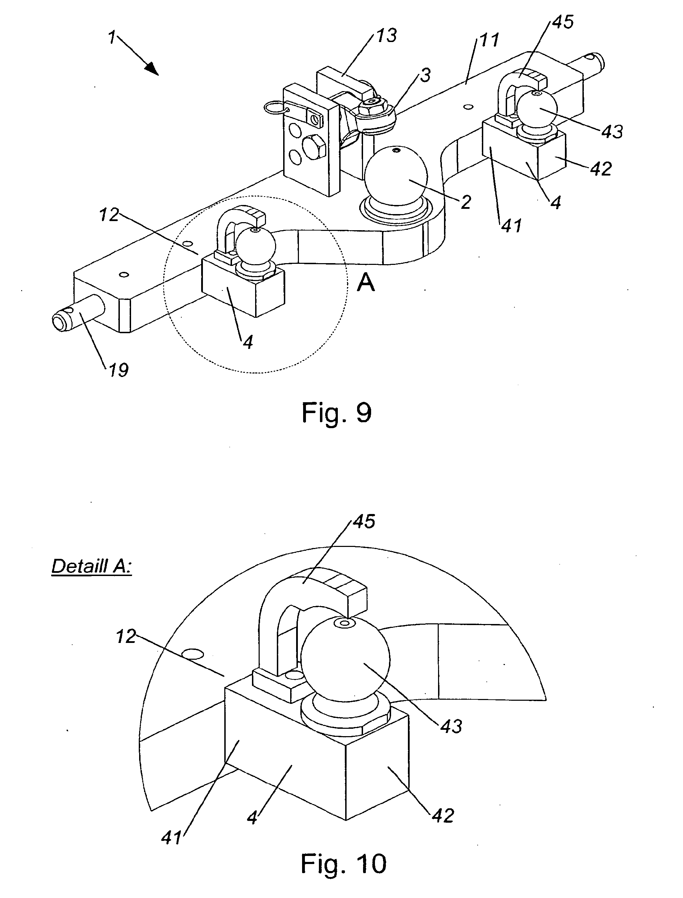

Die Fig. 9 bis 12 zeigen eine weitere Ausführungsform der Niederhaltervorrichtung 1, wobei das Befestigungselement 11 zum Befestigen auf einem Grundrahmen ausgebildet ist. Dabei können an dem Befestigungselement 11 Zapfen 19 angeordnet sein, die in gegengleiche Ausnehmungen des Grundrahmens eingreifen. Bei der in den Fig. 9 bis 12 gezeigten Ausführungsform ist das Befestigungselement 11 als sich zwischen gegenüberliegenden Wangen des Grundrahmens erstreckende Tragplatte ausgebildet.

Anstelle der Kupplungskugel 2 kann auch ein Zugzapfen vorgesehen sein, wobei dann eine sogenannte Piton-Fix Kupplung ausgebildet wird.

Die Grundplatte 9 und/oder der Grundrahmen kann mittelbar oder unmittelbar mit einem Zugfahrzeug verbunden werden und überträgt im Betrieb die von der Zugöse auf die Kupplungskugel 2 wirkenden Kräfte auf das Zugfahrzeug. Beispielsweise kann die Grundplatte 9 ein Einschub für eine Pick-Up Hitch sein.

Niederhaltervorrichtungen 1, die an einem Kupplungsteil gemeinsam mit der Kupplungskugel 2 angeordnet sind, werden üblicherweise bei Kupplungen zur Übertragung hoher Kräfte verwendet, wie sie oftmals in der Landwirtschaft verwendet werden.

Das Befestigungselement 11 und die wenigstens eine Haltevorrichtung 12 können einstückig ausgebildet sein. Dies ermöglicht eine besonders kompakte Bauweise der Niederhaltervorrichtung 1, wobei durch die einstückige Ausbildung eine hohe Belastbarkeit und Standfestigkeit sichergestellt werden kann.

Wie in der Fig. 8 und 9 gezeigt ist, kann das Befestigungselement 11 und die Haltevorrichtung 12 als Platte ausgebildet sein, wodurch die Niederhaltervorrichtung besonders einfach ausgebildet werden kann.

In der Fig. 1 ist gezeigt, dass das Befestigungselement 11 und die Haltevorrichtung 12 als im Wesentlichen U-förmiger Bügel ausgebildet sein können.

Mit dem Befestigungselement 11 kann ein Lagerelement 13 verbunden sein, wobei ein Schwenkteil 3 zum Kontakt mit einer Zugöse schwenkbar in dem Lagerelement 13 gelagert ist. Mit dem Schwenkteil 3 kann die Zugöse festgehalten und/oder freigegeben werden.

Die in den Fig. 1, 8 und 9 bis 12 gezeigten Niederhaltervorrichtungen 1 weisen beidseitig jeweils eine Haltevorrichtung 12 auf. Bei anderen Ausführungsformen kann auch lediglich eine Haltevorrichtung 12 an einer Seite vorgesehen sein. Eine Ausführung mit Haltevorrichtungen 12 auf beiden Seiten ermöglicht eine gute Anpassung der Kupplung an unterschiedliche Anhänger, wodurch die Niederhaltervorrichtung bei einer Vielzahl an Anhängern verwendet werden kann und je nach Bedarf eine oder beide Haltevorrichtungen 12 verwendet werden können.

Der Schwenkteil 3 kann an dem der Zugöse zugewandten Ende einen Einstellmechanismus, insbesondere eine Einstellschraube, aufweisen, mit der ein möglichst spielfreier Sitz der Zugöse eingestellt werden kann. Dabei kann der Einstellmechanismus einfach als Verschleißteil ausgebildet sein, wodurch eine lange Lebensdauer der Niederhaltervorrichtung 1 sichergestellt werden kann.

Die Zwangslenkung kann ein Zwangslenkungsmodul 4 umfassen, wobei das Zwangslenkungsmodul 4 einen Befestigungsteil 41 zum Verbinden mit der Haltevorrichtung 12 und einen Kupplungsteil 42 aufweist.

Bei der Ausgestaltung des Befestigungselementes 11 als U-förmiger Bügel kann das Zwangslenkungsmodul 4 an der Innenseite der umgebogenen Enden des Bügels und/oder an der Außenseite des umgebogenen Endes des Bügels angebracht sein. Auf diese Weise können einfach verschiedene Anlenkpunkte für die Zwangslenkung bereitgestellt werden, wodurch die Verwendbarkeit der Niederhaltervorrichtung bei einer Vielzahl an Anhängern sichergestellt werden kann.

Ausführungsformen von Zwangslenkungsmodulen 4 zum Zusammenwirken mit der Niederhaltervorrichtung 1 gemäß Fig. 1 sind in den Fig. 2 bis 7 dargestellt. Dabei ist das Befestigungsteil 41 im Wesentlichen plattenförmig ausgebildet. Dies stellt eine besonders einfache und kostengünstige Ausbildung des Zwangslenkungsmoduls 4 dar. Dabei können durch Auswechseln des Zwangslenkungsmoduls 4 eine Vielzahl verschiedener Anhänger einfach unter Verwendung der Niederhaltervorrichtung 2 mit einem Zugfahrzeug verbunden werden.

Bei den in den Fig. 9 bis 12 gezeigten Ausführungsform ist das Befestigungsteil 41 einstückig mit dem Kupplungsteil 42 und quaderförmig ausgebildet. Dies stellt eine besonders einfache und kostengünstig herstellbare Ausgestaltung des Zwangslenkungsmoduls dar. Weiters weist diese Ausführung eine besonders hohe Beanspruchbarkeit auf.

Durch die Zwangslenkung können insbesondere bei mehrachsigen Anhängern zumindest die Räder einer Achse des Anhängers mitgelenkt werden, wobei die Zwangslenkung zusätzlich zur Kupplungskugel 2 bzw. des Zugzapfens wenigstens einen weiteren Anlenkpunkt bereitstellt, über den die Auslenkung des Anhängers im Vergleich zu dem Zugfahrzeug ermittelt und die Räder entsprechend gesteuert werden können. Dieser zusätzliche Anlenkpunkt wird üblicherweise Zwangslenkung genannt. Mit der Zwangslenkung kann das Fahrverhalten des Gespanns in Kurven verbessert werden.

Die Position, an der der zusätzliche Anlenkpunkt vorzusehen ist, ist dabei von dem Aufbau des Anhängers bestimmt. Da oftmals mit einer Anhängerkupplung mehrere Anhänger gekoppelt werden können sollen, erscheint es günstig, eine Vielzahl an Positionen vorzusehen, an der ein zusätzlicher Anlenkpunkt bereitgestellt werden kann. Dabei kann der Anlenkpunkt auf der selben Seite der Grundplatte 9 wie die Kupplungskugel 2 und/oder auf der gegenüberliegenden Seite vorgesehen sein, also in Relation zur Kupplungskugel 2 vorzugsweise in gleicher Richtung und/oder in entgegengesetzter Richtung ausgerichtet sein. Weiters können Anlenkpunkte auf beiden Seiten vorgesehen sein. Sind auch auf zwei gegenüberliegenden Seiten der Kupplungskugel zwei Anlenkpunkte vorgesehen, so können auf einfache Weise jedenfalls vier unabhängige Anlenkpunkte bereitgestellt werden.

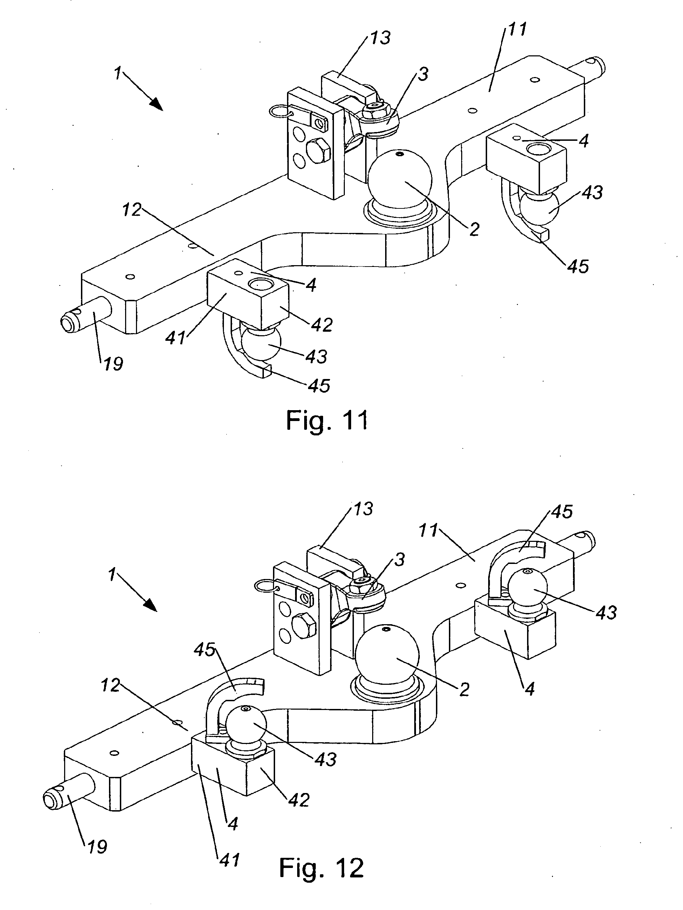

Das Zwangslenkungsmodul 4 kann mit der Haltevorrichtung 12 unter Ausbildung eines Drehgelenkes verbunden sein. Dadurch kann das Zwangslenkungsmodul 4 besonders einfach in verschiedene Stellungen verbracht werden. Die Ausbildung eines derartigen Drehgelenkes kann insbesondere bei einer Niederhaltervorrichtung 1 gemäß den Fig. 9 bis 12 vorgesehen sein, wobei die Zwangslenkungsmodule 4 in Fig. 11 gegenüber denen in Fig. 9 um 180° verdreht sind. Vorzugsweise können zumindest zwei Stellungen des Zwangslenkungsmoduls 4 arretierbar sein, insbesondere die in den Fig. 9 und 11 gezeigten Stellungen. Dadurch kann ein unbeabsichtigtes Verdrehen der Zwangslenkungsmodule 4 wirksam vermieden werden.

Durch die kompakte Bauweise von Zwangslenkung und Niederhalter wird die Verschwenkbarkeit des Anhängers gegenüber dem Zugfahrzeug wenig eingeschränkt.

Das Zwangslenkungsmodul und/oder das mit dem Zwangslenkungsmodul verbundene Führungsgestänge des Anhängers können außerhalb der Ebene der Anhängerkupplung und des mit dieser verbundenen Zuggestänges des Anhängers angeordnet sein. Dadurch kann eine besonders weite Auslenkbarkeit des Anhängers sichergestellt werden.

Der Kupplungsteil 42 kann eine Zwangslenkungskugel 43 umfassen. Mit der Zwangslenkungskugel 42 kann ein nur geringes Spiel erreicht werden, wodurch die Zuverlässigkeit und Sicherheit der Zwangslenkung erhöht wird. Bei anderen Ausführungsformen kann das Kupplungsteil 42 auch einen Haken, Bolzen od. dgl. umfassen.

Eine besonders hohe Lebensdauer der Kupplungskugel 2 und/oder der Zwangslenkungskugel 43 kann erreicht werden, wenn die Kupplungskugel 2 und/oder die Zwangslenkungskugel 43 wenigstens eine Schmiervorrichtung, insbesondere eine Schmierbohrung, aufweist.

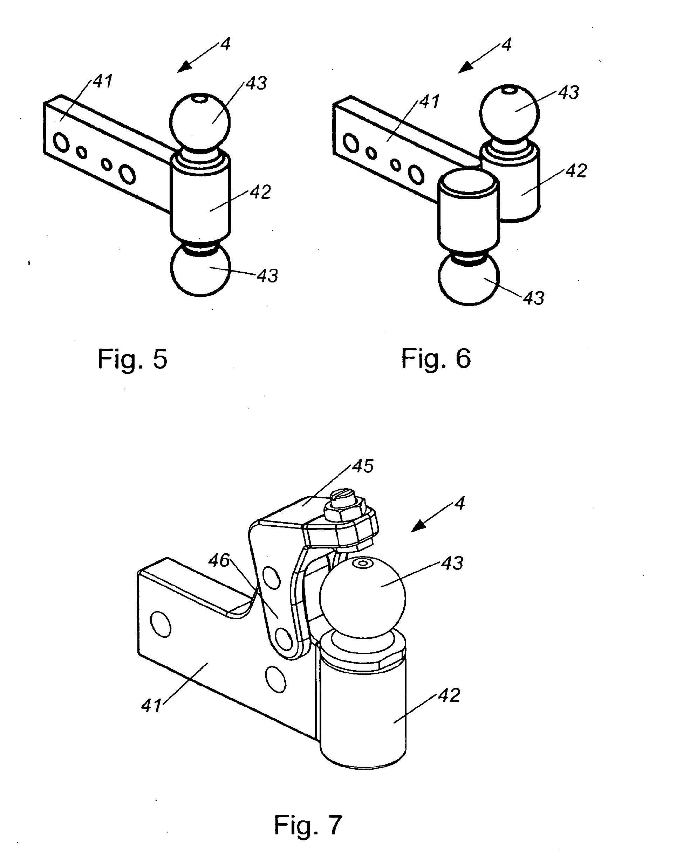

Eine einfache und kompakte Bauweise der Zwangslenkung kann erreicht werden, wenn an dem Zwangslenkungsmodul 4 eine Haltevorrichtung 45 zum Halten einer auf der Zwangslenkungskugel 43 angeordneten Zugöse angeordnet ist. Eine Ausführungsform eines derartigen Zwangslenkungsmoduls 4 ist in Fig. 7 gezeigt. Bei anderen Ausführungsformen kann anstelle der Zwangslenkungskugel 43 auch ein Zwangslenkungszapfen vorgesehen sein. Die Haltevorrichtung 45 ist vorzugsweise gelenkig mit dem Zwangslenkungsmodul 4 verbunden.

Die Haltevorrichtung 45 kann im Bereich der Verbindung mit dem Zwangslenkungsmodul 4 als Gabelelement 46 ausgebildet sein, wobei das Zwangslenkungsmodul 4 zumindest bereichsweise in dem Gabelelement 46 angeordnet ist. Dabei kann der Befestigungsteil 41 im Wesentlichen plattenförmig ausgebildet sein und das Gabelelement 46 einen Bereich, insbesondere einen Fortsatz, des Befestigungsteils 41 umfassen. Dies stellt eine besonders einfache und belastbare Ausführungsform des Zwangslenkungsmoduls dar.

Eine einfache Ausgestaltung der Haltevorrichtung 45 kann bereitgestellt werden, wenn die Haltevorrichtung - in Gebrauchslage gesehen - um eine im Wesentlichen lotrechte Achse verschwenkbar ist. In Fig. 12 ist die Haltevorrichtung 45 in einer die Zwangslenkungskugel 43 freigebenden Stellung gezeigt, wobei die Haltevorrichtung 45 um eine - in Gebrauchslage gesehen - im Wesentlichen lotrechte Achse verschwenkt ist. Bei einer Zwangslenkungskugel 43 mit einem angeformten Gewindestück kann die Haltevorrichtung 45 im Wesentlichen um eine Achse parallel zur Zentralachse des Gewindestückes verschwenkbar sein. Auf diese Weise kann die Zwangslenkungskugel 43 einfach und schnell freigegeben bzw. eine mit der Zwangslenkungskugel 43 wirkverbundene Zwangslenkungsöse fixiert werden. Dabei kann vorgesehen sein, dass die Haltevorrichtung 45 mittels einer Steckverbindung arretiert werden kann.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Niederhaltervorrichtung (1) zum Halten einer auf einer Kupplungskugel (2) oder um einen Zugzapfen angeordneten Zugöse, mit einem Befestigungselement (11) zum Befestigen auf einer Grundplatte (9) und/oder einem Grundrahmen, **dadurch gekennzeichnet, dass** an dem Befestigungselement (11) wenigstens eine Haltevorrichtung (12) für eine Zwangslenkung angeordnet ist.

2. Niederhaltervorrichtung nach Anspruch 1, **dadurch gekennzeichnet, dass** das Befestigungselement (11) und die wenigstens eine Haltevorrichtung (12) einstückig ausgebildet sind.

3. Niederhaltervorrichtung nach Anspruch 1 oder 2, **dadurch gekennzeichnet, dass** das Befestigungselement (11) und die wenigstens eine Haltevorrichtung (12) als im Wesentlichen U-förmiger Bügel ausgebildet sind.

4. Niederhaltervorrichtung nach Anspruch 1, 2 oder 3, **dadurch gekennzeichnet, dass** ein Lagerelement (13) mit dem Befestigungselement (11) verbunden ist, wobei ein Schwenkteil (3) zum Kontakt mit einer Zugöse schwenkbar in dem Lagerelement (13) gelagert ist.

5. Niederhaltervorrichtung nach einem der Ansprüche 1 bis 4, **dadurch gekennzeichnet, dass** die Zwangslenkung ein Zwangslenkungsmodul (4) umfasst und dass das Zwangslenkungsmodul (4) einen Befestigungsteil (41) zum Verbinden mit der Haltevorrichtung (12) und einen Kupplungsteil (42) aufweist.

6. Niederhaltervorrichtung nach Anspruch 5, **dadurch gekennzeichnet, dass** das Befestigungsteil (41) im Wesentlichen plattenförmig und/oder quaderförmig ist.

7. Niederhaltervorrichtung nach Anspruch 5 oder 6, **dadurch gekennzeichnet, dass** der Kupplungsteil (42) eine Zwangslenkungskugel (43) umfasst.

8. Niederhaltervorrichtung nach Anspruch 5, 6 oder 7, **dadurch gekennzeichnet, dass** das Zwangslenkungsmodul ein Drehgelenk ausbildend mit der Haltevorrichtung 12 verbunden ist, wobei vorzugsweise zumindest zwei Stellungen des Zwangslenkungsmoduls arretierbar sind.

9. Niederhaltervorrichtung nach einem der Ansprüche 5 bis 8, **dadurch gekennzeichnet, dass** an dem Zwangslenkungsmodul (4) eine Haltevorrichtung (45) zum Halten einer auf der Zwangslenkungskugel (43) angeordneten Zugöse angeordnet ist.

10. Niederhaltervorrichtung nach Anspruch 9, **dadurch gekennzeichnet, dass** die Haltevorrichtung (45) gelenkig mit dem Zwangslenkungsmodul (4) verbunden ist.

11. Niederhaltervorrichtung nach Anspruch 10, **dadurch gekennzeichnet, dass** die Haltevorrichtung (45) im Bereich der Verbindung mit dem Zwangslenkungsmodul (4) als Gabelelement (46) ausgebildet ist, und dass das Zwangslenkungsmodul (4) zumindest bereichsweise in dem Gabelelement (46) angeordnet ist.

12. Niederhaltervorrichtung nach Anspruch 10, **dadurch gekennzeichnet, dass** die Haltevorrichtung (45) - in Gebrauchslage gesehen - um eine im Wesentlichen lotrechte Achse verschwenkbar ist.

## Claims

1. A holding-down apparatus (1) for holding a drawbar eye arranged on a hitch ball (2) or about a trunnion, comprising a fastening element (11) for fastening to a base plate (9) and/or a base frame, **characterized in that** at least one holding apparatus (12) for a forced steering is arranged on the fastening element (11).

2. A holding-down apparatus according to claim 1, **characterized in that** the fastening element (11) and the at least one holding apparatus (12) is arranged in an integral manner.

3. A holding-down apparatus according to claim 1 or 2, **characterized in that** the fastening element (11) and the at least one holding apparatus (12) are arranged as a substantially U-shaped bracket.

4. A holding-down apparatus according to claim 1, 2 or 3, **characterized in that** one bearing element (13) is connected with the fastening element (11), with a swiveling part (3) for contact with a drawbar eye being held in a pivotable manner in the bearing element (13).

5. A holding-down apparatus according to one of the claims 1 to 4, **characterized in that** the forced steering comprises a forced steering module (4), and the forced steering module (4) comprises a fastening part (41) for connection with the holding apparatus (12) and a coupling part (42).

6. A holding-down apparatus according to claim 5, **characterized in that** the fastening part (41) is substantially plate-shaped and/or cuboid.

7. A holding-down apparatus according to claim 5 or 6, **characterized in that** the coupling part (42) comprises a forced-steering ball (43).

8. A holding-down apparatus according to claim 5, 6 or 7, **characterized in that** the forced steering module is connected with the holding apparatus (12) by forming a swivel, with preferably at least two positions of the forced steering module being lockable.

9. A holding-down apparatus according to one of the claims 5 to 8, **characterized in that** a holding apparatus (45) for holding a drawbar eye arranged on the forced steering ball (43) is arranged on the forced steering module (4).

10. A holding-down apparatus according to claim 9, **characterized in that** the holding apparatus (45) is connected in an articulated manner with the forced steering module (4).

11. A holding-down apparatus according to claim 10, **characterized in that** the holding apparatus (45) is arranged as a fork element (46) in the region of the connection with the forced steering module (4) and the forced steering module (4) is arranged at least in sections in the fork element (46).

12. A holding-down apparatus according to claim 10, **characterized in that** the holding-down apparatus (45) can be swiveled about a substantially perpendicular axis, as seen in the position of use.

## Revendications

1. Dispositif de maintien (1) pour le maintien d'un anneau de traction disposé sur une boule d'attelage (2) ou un goujon de traction, avec un élément de fixation (11) pour la fixation sur une plaque de base (9) et/ou un cadre de base, **caractérisé en ce qu'**au moins un dispositif de rétention (12) pour un guidage forcé est prévu sur l'élément de fixation (11).

2. Dispositif de maintien selon la revendication 1, **caractérisé en ce que** l'élément de fixation (11) et l'au moins un dispositif de rétention (12) sont construits d'un seul tenant.

3. Dispositif de maintien selon la revendication 1 ou 2, **caractérisé en ce que** l'élément de fixation (11) et l'au moins un dispositif de rétention (12) sont construits comme un étrier sensiblement en forme de U.

4. Dispositif de maintien selon la revendication 1, 2 ou 3, **caractérisé en ce qu'**un élément d'appui (13) est relié à l'élément de fixation (11), une partie pivotante (3) étant supportée de façon pivotante dans l'élément d'appui (13) en vue du contact avec un anneau de traction.

5. Dispositif de maintien selon l'une des revendications 1 à 4, **caractérisé en ce que** la guidage forcé comprend un nodule de guidage forcé (4) et **en ce que** le module de guidage forcé (4) comporte une partie de fixation (41) pour l'assemblage avec le dispositif de rétention (12) et une partie d'attelage (42).

6. Dispositif de maintien selon la revendication 5, **caractérisé en ce que** la partie de fixation (41) est pour l'essentiel en forme de plaque et/ou de forme carrée.

7. Dispositif de maintien selon la revendication 5 ou 6, **caractérisé en ce que** la partie d'attelage (42) possède une rotule de guidage forcé (43).

8. Dispositif de maintien selon la revendication 5, 6 ou 7, **caractérisé en ce que** le module de guidage forcé est relié avec le dispositif de rétention (12) en formant une articulation pivotante, le module de guidage forcé pouvant de préférence être bloqué dans deux positions.

9. Dispositif de maintien selon l'une des revendications 5 à 8, **caractérisé en ce qu'**il est prévu disposé sur le module de guidage forcé (4) un dispositif de rétention (45) pour le maintien d'un oeillet d'attelage disposé sur la rotule de guidage forcé (43).

10. Dispositif de maintien selon la revendication 9, **caractérisé en ce que** le dispositif de rétention (45) est relié de façon articulée avec le module de guidage forcé (4).

11. Dispositif de maintien selon la revendication 10, **caractérisé en ce que** le dispositif de rétention (45) est conformé au niveau de la liaison avec le module de guidage forcé (4) comme un élément en fourche (46) et **en ce que** le module de guidage forcé (4) est disposé au moins en partie dans l'élément en fourche (46).

12. Dispositif de maintien selon la revendication 10, **caractérisé en ce que** le dispositif de rétention (45) peut pivoter, vu dans la position d'utilisation, autour d'un axe sensiblement vertical.
